(19) **Europäisches Patentamt / European Patent Office / Office européen des brevets**

(11) **EP 4 471 949 A1**

(12) **EUROPEAN PATENT APPLICATION**
published in accordance with Art. 153(4) EPC

(43) Date of publication:
04.12.2024 Bulletin 2024/49

(21) Application number: 22961815.2

(22) Date of filing: 14.10.2022

(51) International Patent Classification (IPC):
*H01M 50/20* (2021.01)

(52) Cooperative Patent Classification (CPC):
H01M 50/20

(86) International application number:
PCT/CN2022/125514

(87) International publication number:
WO 2024/077629 (18.04.2024 Gazette 2024/16)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Contemporary Amperex Technology
Co., Limited
Fujian 352100 (CN)

(72) Inventors:
• ZHANG, Tao
Ningde City, Fujian 352100 (CN)

• HE, Jianfu
Ningde City, Fujian 352100 (CN)
• LIU, Qian
Ningde City, Fujian 352100 (CN)
• YE, Yonghuang
Ningde City, Fujian 352100 (CN)
• CUI, Chen
Ningde City, Fujian 352100 (CN)

(74) Representative: Kraus & Lederer PartGmbB
Thomas-Wimmer-Ring 15
80539 München (DE)

(54) **BATTERY CELL, BATTERY AND ELECTRIC DEVICE**

(57) The present application provides a battery cell, a battery and an electrical apparatus, which belong to the technical field of batteries. The battery cell includes a case and at least three electrode assemblies; a cavity is defined in the case, the cavity includes a first region and a second region, the first region is closer to the case than the second region, a polarization parameter of a single electrode assembly located in the first region is $P_A$, a polarization parameter of a single electrode assembly located in the second region is $P_B$, and $P_A < P_B$. The battery cell of the present application balances the broadening of the SOC usage range due to a temperature rise by controlling the polarization parameter $P_B$ of the single electrode assembly in the second region to be greater than the polarization parameter $P_A$ of the single electrode assembly in the first region, so that the degree of delithiation of the single electrode assembly in the second region matches the degree of delithiation of the single electrode assembly in the first region, thereby improving or avoiding fast capacity attenuation of the battery cell caused by inconsistent attenuation of different electrode assemblies, and extending the service life of the battery cell.

FIG. 4

**Description**

**Technical Field**

The present application relates to the technical field of batteries, and in particular, to a battery cell, a battery, and an electrical apparatus.

**Background**

Power batteries have been widely used in electric vehicles, mobile phones, tablets and power storage fields because of their significant advantages such as low price, environmental friendliness, long cycle life, and good safety performance. At present, the requirements for the use of batteries in various fields have increased, and the problem of capacity attenuation has become a main limiting factor for power batteries.

**Summary of the Invention**

In view of the above problem, the present application provides a battery cell, a battery, and an electrical apparatus, which can alleviate the problem of capacity attenuation of the battery.

In a first aspect, the present application provides a battery cell, including: a case and at least three electrode assemblies; wherein a cavity is defined in the case, the cavity includes a first region and a second region, the first region is closer to the case than the second region, the at least three electrode assemblies are arranged in the cavity, the electrode assemblies have polarization parameters P, $P=(R_x \times R_y)^{0.5}$, wherein $R_x$ is the resistance of a positive electrode plate, $R_y$ is the resistance of a negative electrode plate, the polarization parameter of a single electrode assembly located in the first region is $P_A$, the polarization parameter of a single electrode assembly located in the second region is $P_B$, and $P_A < P_B$.

In some cases known to the inventors, since the electrode assembly in the second region is closer to the middle of the case than the electrode assembly in the first region, an operating temperature of the electrode assembly in the second area is higher, and under the same cut-off condition, an actual state of charge (SOC) usage range of the electrode assembly in the second region is wider. The battery cell of the present application balances the broadening of the SOC usage range due to a temperature rise by controlling the polarization parameter $P_B$ of the single electrode assembly in the second region to be greater than the polarization parameter $P_A$ of the single electrode assembly in the first region, so that the degree of delithiation of the single electrode assembly in the second region matches the degree of delithiation of the single electrode assembly in the first region, thereby improving or avoiding fast capacity attenuation of the battery cell caused by inconsistent attenuation of different electrode assemblies, and extending the service life of the battery cell.

In some examples, the volume of the battery cell is $V mm^3$, and V, $P_B$ and $P_A$ satisfy the following relationship: $6.1 \leq P_B \times ln(V)/P_A \leq 12$. When $6.1 \leq P_B \times ln(V)/P_A \leq 12$, the difference between the polarization parameter $P_A$ of the single electrode assembly located in the first region and the polarization parameter $P_B$ of the single electrode assembly located in the second region is not too large or too small; when $P_B \times ln(V)/P_A$ is less than 6.1, the difference between the polarization parameter $P_A$ of the single electrode assembly located in the first region and the polarization parameter $P_B$ of the single electrode assembly located in the second region is too small, or it may lead to $P_A > P_B$, which has less effect on improving the service life of the battery cell; when $P_B \times ln(V)/P_A$ is greater than 12, the difference between the polarization parameter $P_A$ of the single electrode assembly located in the first region and the polarization parameter $P_B$ of the single electrode assembly located in the second region is too large, which may reduce the service life of the battery cell.

In some examples, the at least three electrode assemblies are stacked in the cavity, and along the stacking direction, the polarization parameters of the electrode assemblies located at both ends are $P_A$, and the polarization parameters of the electrode assemblies located in the middle are $P_B$. When the at least three electrode assemblies are stacked in the cavity, the electrode assemblies located at both ends are closer to the case than the electrode assemblies located in the middle, the temperature rise of the electrode assemblies located in the middle is higher than that of the electrode assemblies located at both ends during use, that is, the actual SOC usage range of the electrode assemblies in the middle is wider under the same cut-off condition. The battery cell of the present application balances the broadening of the SOC usage range due to a temperature rise by controlling the polarization parameter $P_B$ of the electrode assemblies located in the middle to be greater than the polarization parameter $P_A$ of the electrode assemblies located at both ends, so that the degree of delithiation of the electrode assemblies in the middle matches the degree of delithiation of the electrode assemblies located at both ends, thereby improving or avoiding fast capacity attenuation of the battery cell caused by inconsistent attenuation of the different electrode assemblies, and extending the service life of the battery cell.

In some examples, the cavity further includes a third region, the third region is closer to the case than the second region, the first region is closer to the case than the third region, the polarization parameter of a single electrode assembly located in the third region is Pc, and $P_B \geq P_C \geq P_A$. Since the electrode assembly in the second region is closer to the middle of the case than the electrode assembly in the third region, the operating temperature of the electrode assembly in the second region is higher, and an operating temperature of the electrode assembly in the third region is higher than that of the electrode assembly in the first region, under the same cut-off condition, an actual SOC usage range of the electrode assembly in the second region is wider than an actual SOC usage range of the electrode assembly in the third region, the actual SOC usage range of the electrode assembly in the third region is wider than an actual SOC usage range of the electrode assembly in the first region, $P_B \geq P_C \geq P_A$ is beneficial to balancing the broadening of the SOC usage range due to the temperature rises of the different regions, so that the degree of delithiation of the single electrode assemblies in the different regions matches better, thereby extending the service life of the battery cell.

In some examples, the battery cell satisfies at least one of the following conditions a~e: a, the proportion of a conductive agent in an active material of the single electrode assembly located in the first region is greater than that of a conductive agent in an active material of the single electrode assembly located in the second region, the active material including a positive electrode active material and/or a negative electrode active material; b, a coating mass of the positive electrode active material of the single electrode assembly located in the first region is less than that of the positive electrode active material of the single electrode assembly located in the second region; c, a compacted density of the electrode plate of the single electrode assembly located in the first region is greater than that of the electrode plate of the single electrode assembly located in the second region, the electrode plate including a positive electrode plate and/or a negative electrode plate; d, a powder resistance of the positive electrode active material of the single electrode assembly located in the first region is less than that of the positive electrode active material of the single electrode assembly located in the second region; and e, a powder resistance of the negative electrode active material of the single electrode assembly located in the first region is less than that of the negative electrode active material of the single electrode assembly located in the second region. The proportion of the conductive agent in the active material of the single electrode assembly, the coating mass of the positive electrode active material of the single electrode assembly, the compacted density of the electrode plate of the single electrode assembly, the powder resistance of the positive electrode active material of the single electrode assembly, and the powder resistance of the negative electrode active material of the single electrode assembly will affect the polarization parameter P of the electrode assembly.

In some examples, the ratio of the proportion of the conductive agent in the active material of the single electrode assembly located in the first region to the proportion of the conductive agent in the active material of the single electrode assembly located in the second region is 1.01-3: 1. The greater the proportion of the conductive agent in the active material of the single electrode assembly, the lower the polarization parameter P of the electrode assembly. When the ratio of the proportion of the conductive agent in the active material of the single electrode assembly located in the first region to the proportion of the conductive agent in the active material of the single electrode assembly located in the second region is 1.01-3: 1, not only can the polarization parameter $P_A$ of the single electrode assembly located in the first region be less than the polarization parameter $P_B$ of the single electrode assembly located in the second region, but also the battery cell can maintain a high energy density.

In some examples, the ratio of the coating mass of the positive electrode active material of the single electrode assembly located in the first region to the coating mass of the positive electrode active material of the single electrode assembly located in the second region is 0.7-0.99: 1. The greater the coating mass of the positive electrode active material of the single electrode assembly, the higher the polarization parameter P of the electrode assembly. When the ratio of the coating mass of the positive electrode active material of the single electrode assembly located in the first region to the coating mass of the positive electrode active material of the single electrode assembly located in the second region is 0.7-0.99: 1, not only can the polarization parameter $P_A$ of the single electrode assembly located in the first region be less than the polarization parameter $P_B$ of the single electrode assembly located in the second region, but also the difference between the polarization parameter $P_A$ of the single electrode assembly located in the first region of the battery cell and the polarization parameter $P_B$ of the single electrode assembly located in the second region of the battery cell can be prevented from being too large.

In some examples, the ratio of the compacted density of the electrode plate of the single electrode assembly located in the first region to the compacted density of the electrode plate of the single electrode assembly located in the second region is 1.01-1.5: 1. The greater the compacted density of the electrode plate of the single electrode assembly, the lower the polarization parameter P of the electrode assembly. When the ratio of the compacted density of the electrode plate of the single electrode assembly located in the first region to the compacted density of the electrode plate of the single electrode assembly located in the second region is 1.01-1.5: 1, not only can the polarization parameter $P_A$ of the single electrode assembly located in the first region be less than the polarization parameter $P_B$ of the single electrode assembly located in the second region, but also the battery cell can maintain a higher energy density.

In a second aspect, the present application provides a battery, including the battery cell according to the above examples.

In a third aspect, the present application provides an electrical apparatus, including the battery according to the above examples, the battery being configured to provide electric energy.

The above description is only a summary of the technical solutions of the present application. In order to be able to understand the technical means of the present application more clearly, the technical means can be implemented according to the content of the specification. Furthermore, to make the above and other objectives, features and advantages of the present application more comprehensible, specific implementations of the present application are exemplified below.

**Description of Drawings**

Various other advantages and benefits will become apparent to those of ordinary skill in the art upon reading the following detailed description of the preferred examples. The drawings are for the purpose of illustrating the preferred examples only and are not to be considered a limitation to the present application. And the same components are denoted by the same reference numerals throughout the drawings. In the drawings:

Fig. 1 is a schematic structural diagram of a vehicle provided by some examples of the present application;
Fig. 2 is an exploded view of a battery provided by some examples of the present application;
Fig. 3 is an exploded schematic structural diagram of a first battery cell according to some examples of the present application;
Fig. 4 is a perspective view of a first battery cell from a front view according to some examples of the present application;
Fig. 5 is a schematic diagram of the arrangement of electrode assemblies in a first battery cell according to some examples of the present application;
Fig. 6 is a schematic diagram of the arrangement of electrode assemblies in a second battery cell according to some examples of the present application;
Fig. 7 is a schematic diagram of the arrangement of electrode assemblies in a third battery cell according to some examples of the present application; and
Fig. 8 is a schematic diagram of the arrangement of electrode assemblies in a fourth battery cell according to some examples of the present application.

Reference numerals in Detailed Description are as follows:

1000-vehicle;
100-Battery; 200-controller; 300-motor;
10-box body; 11-first part; 12-second part;
20-battery cell; 21-end cover; 22-case; 23-electrode assembly;
24-first region; 25-second region; 26-third region.

**Detailed Description**

Examples of the technical solutions of the present application will be described in detail below in conjunction with the drawings. The following examples are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific examples and are not intended to limit the present application; the terms "including" and "having" and any variations thereof in the specification and the claims of the present application and in the description of drawings above are intended to cover non-exclusive inclusion.

In the description of the examples of the present application, the technical terms "first", "second" or the like are used only to distinguish between different objects, and are not to be understood as indicating or implying a relative importance or implicitly specifying the number, particular order, or primary and secondary relation of the technical features indicated. In the description of the examples of the present application, the meaning of "a plurality of" is two or more, unless otherwise explicitly and specifically defined.

Reference herein to "an example" means that a particular feature, structure, or characteristic described in connection with the example can be included in at least one example of the present application. The appearance of this phrase in various places in the specification does not necessarily refer to the same example, nor is it a separate or alternative example that is mutually exclusive with other examples. It is explicitly and implicitly understood by those skilled in the art that the examples described herein may be combined with other examples.

In the description of the examples of the present application, the term "and/or" is only an association relationship for describing associated objects, indicating that there may be three relationships, for example A and/or B may represent three situations: A exists alone, both A and B exist, and B exists alone. In addition, the character "/" herein generally means that front and rear associated objects are in an "or" relationship.

In the description of the examples of the present application, the term "a plurality of" refers to two or more (including two), and similarly, "multiple groups" refers to two or more (including two) groups, and "multiple sheets" refers to two or more (including two) sheets.

In the description of the examples of the present application, the orientation or position relationship indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or position relationship shown in the drawings and are intended to facilitate the description of the examples of the present application and simplify the description only, rather than indicating or implying that the device or element referred to must have a particular orientation or be constructed and operated in a particular orientation, and therefore are not to be interpreted as limitations on the examples of the present application.

In the description of the examples of the present application, unless otherwise expressly specified and limited, the technical terms "mount", "join", "connect", "fix", etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the examples of the present application can be understood according to specific situations.

At present, from the perspective of the development of the market situation, power batteries are more and more widely used. The power batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of the power batteries, the market demand is also constantly expanding.

The inventors noticed that for the structure of a battery cell with a plurality of electrode assemblies, the speed of capacity attenuation of the different electrode assemblies is different, and the overall capacity of the battery cell is limited by the electrode assembly with the fastest capacity attenuation due to a "wooden barrel effect" during use.

In order to alleviate the problem of capacity attenuation of the battery cell, the inventors found that the battery cell is accompanied by heat generation and heat dissipation during charging and discharging processes. For the structure of the battery cell with the plurality of electrode assemblies, different battery cells are in different environments, the electrode assemblies away from the case will generate heat accumulation due to the inability to timely dissipate heat, resulting in high operating temperature of the electrode assembly away from the case, which will lead to smaller electrochemical polarization of the electrode assembly far away from the case, that is, under the same cut-off condition, an actual state of charge (SOC) usage range of the electrode assembly away from the case is wider, which will lead to faster capacity attenuation.

Based on the above considerations, in order to improve the technical problem of fast capacity attenuation of the battery cell due to electrochemical polarization, the inventors designed a battery cell after in-depth research. Since an electrode assembly in a second region is closer to the middle of a case, an operating temperature of the electrode assembly in the second region is higher than an operating temperature of the electrode assembly in a first region, and under the same cut-off condition, an actual SOC usage range of the electrode assembly in the second region is wider. The battery cell of the present application balances the broadening of the SOC usage range due to a temperature rise by controlling the polarization parameter $P_B$ of the single electrode assembly in the second region to be greater than the polarization parameter $P_A$ of the single electrode assembly in the first region, so that the degree of delithiation of the single electrode assembly in the second region matches the degree of delithiation of the single electrode assembly in the first region, thereby improving or avoiding fast capacity attenuation of the battery cell caused by inconsistent attenuation of different electrode assemblies, and extending the service life of the battery cell.

The battery mentioned in the examples of the present application refers to a single physical module including a plurality of battery cells to provide higher voltage and capacity. The battery generally includes a battery box body for encapsulating a plurality of battery cells, and the box body can prevent liquids or other foreign matters from affecting charging or discharging of the battery cells.

The battery cell may include a lithium-ion secondary battery cell, a lithium-ion primary battery cell, a lithium-sulfur battery cell, a sodium/lithium-ion battery cell, a sodium-ion battery cell or a magnesium-ion battery cell, or the like, which is not limited in the examples of the present application. The battery cell may be cylindrical, flat, rectangular, or in other shapes, which is also not limited in the examples of the present application. The battery cells are generally divided into three types according to encapsulating manners: cylindrical battery cells, rectangular battery cells, and pouch battery cells.

The battery cell includes an electrode assembly and an electrolyte solution, the electrode assembly being composed of a positive electrode plate, a negative electrode plate and a separator. The battery cell operates mainly relying on movement of metal ions between the positive electrode plate and the negative electrode plate. The positive electrode plate includes a positive electrode current collector and a positive electrode active material layer, wherein the positive electrode active material layer is coated on a surface of the positive electrode current collector, the part of the positive electrode current collector not coated with the positive electrode active material layer protrudes from the part of the positive electrode current collector already coated with the positive electrode active material layer, and the part of the positive electrode current collector not coated with the positive electrode active material layer serves as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer, wherein the negative electrode active material layer is coated on a surface of the negative electrode current collector, and the part of the negative electrode current collector not coated with the negative electrode active material layer protrudes from the part of the negative electrode current collector coated with the negative electrode active material layer, and the part of the negative electrode current collector not coated with the negative electrode active material layer serves as a negative tab. The material of the negative electrode current collector may be copper, and the negative electrode active material may be carbon, silicon, or the like. In order to ensure that no fusing occurs when a large current passes, there are a plurality of positive tabs which are stacked together, and there are a plurality of negative tabs which are stacked together. The separator may be made from polypropylene (PP) or polyethylene (PE), or the like. In addition, the electrode assembly may be of a wound structure or a laminated structure, which is not limited in the examples of the present application.

The battery cell further includes a current collecting member, which is configured to electrically connect the tab and an electrode terminal of the battery cell to transport electric energy from the electrode assembly to the electrode terminal, and to the outside of the battery cell through the electrode terminal; the plurality of battery cells are electrically connected through a bus member, to realize series, parallel or parallel-series connection of the plurality of battery cells.

The battery further includes a sampling terminal and a battery management system, the sampling terminal being connected to the bus member and being configured to collect battery cell information, such as voltage or temperature, or the like. The sampling terminal transmits the collected battery cell information to the battery management system. When the battery management system detects that the battery cell information exceeds a normal range, an output power of the battery may be limited to realize safety protection.

It should be understood that the battery described in the examples of the present application is applicable to various electrical apparatus using the battery, such as a mobile phone, a portable apparatus, a laptop, a battery vehicle, an electric vehicle, a ship, a spacecraft, an electronic toy, an electric tool, etc. For example, the spacecraft includes an airplane, a rocket, a space shuttle, a spaceship or the like; the electronic toy includes a fixed or mobile electronic toy, such as a game console, an electric vehicle toy, an electric ship toy, an electric aircraft toy or the like; and the electric tool includes a metal-cutting power tool, a grinding power tool, an assembly power tool and a railway power tool, such as an electric drill, an electric grinder, an electric wrench, an electric screwdriver, an electric hammer, an electric impact drill, a concrete vibrator and an electric planer.

The battery cell and the battery described in the examples of the present application are not only applicable to the electrical apparatuses described above, but also applicable to all apparatuses using battery cells and the batteries. However, for the sake of brevity, the following examples are described by taking an electric vehicle as an example.

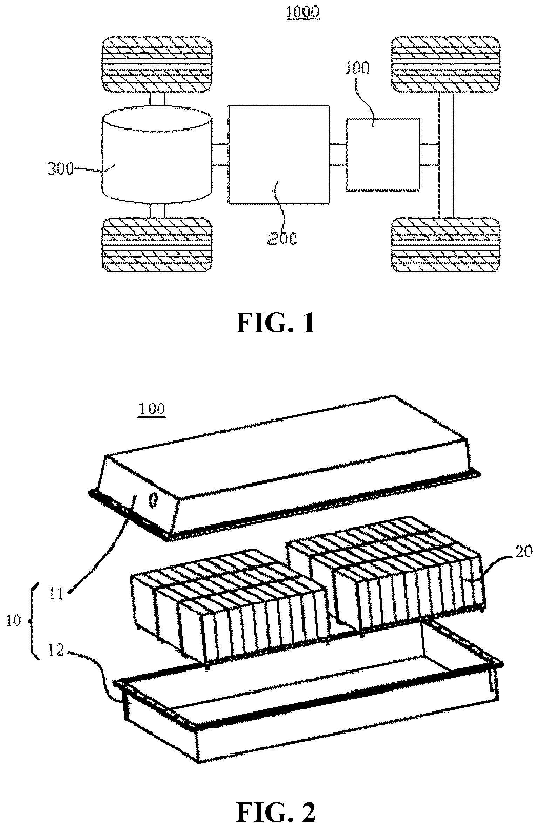

Please refer to Fig. 1, Fig. 1 is a schematic structural diagram of a vehicle according to some examples of the present application. The vehicle 1000 may be a fuel vehicle, a gas vehicle, or a new energy vehicle, and the new energy vehicle may be an all-electric vehicle, a hybrid vehicle, or an extended-range electric vehicle. The interior of the vehicle 1000 is provided with a battery 100, and the battery 100 may be arranged at the bottom or head or tail of the vehicle 1000. The battery 100 may be configured to power the vehicle 1000. For example, the battery 100 may be used as an operating power source of the vehicle 1000. The vehicle 1000 may further include a controller 200 and a motor 300. The controller 200 is configured to control the battery 100 to power the motor 300, for example, configured to meet operating power requirements when the vehicle 1000 is starting, navigating and driving.

In some examples of the present application, the battery 100 not only may serve as an operating power source of the vehicle 1000, but also may serve as a driving power source of the vehicle 1000, thus replacing or partially replacing fuel or natural gas to provide driving power for the vehicle 1000.

Please refer to Fig. 2, Fig. 2 is an exploded view of a battery according to some examples of the present application. The battery 100 includes a box body 10 and battery cells 20, and the battery cells 20 are accommodated within the box body 10. Here, the box body 10 is configured to provide an accommodating space for the battery cells 20, and the box body 10 may be of various structures. In some examples, the box body 10 may include a first part 11 and a second part 12. The first part 11 and the second part 12 are covered by each other, and the first part 11 and the second part 12 together define an accommodating space for accommodating the battery cells 20. The second part 12 may be a hollow structure with one end open, the first part 11 may be a plate-like structure, and the first part 11 covers the opening side of the second part 12, so that the first part 11 and the second part 12 together define the accommodating space. It is also possible that each of the first part 11 and the second part 12 is a hollow structure with one side open, and the opening side of the first part 11 covers the opening side of the second part 12. Of course, the box body 10 formed by the first part 11 and the second part 12 can be of various shapes, such as a cylinder or a cuboid.

In the battery 100, there may be a plurality of battery cells 20, and the plurality of battery cells 20 can be connected in series or parallel or in a parallel-series connection, wherein the parallel-series connection means that the plurality of battery cells 20 are connected in both series and parallel. The plurality of battery cells 20 may be directly connected in series, in parallel or in a parallel-series connection, and then a whole body composed of the plurality of battery cells 20 is accommodated into the box body 10. Certainly, the battery 100 may also be the plurality of battery cells 20 first connected in series, in parallel or in a parallel-series connection to form battery modules, and the plurality of battery modules are then connected in series, in parallel or in a parallel-series connection to form a whole, and accommodated in the box body 10. The battery 100 may further include other structures, for example, the battery 100 may further include a bus member for electrically connecting the plurality of battery cells 20.

Each battery cell 20 is a secondary battery, or may be a lithium-sulfur battery, a sodium-ion battery or a magnesium-ion battery, but is not limited thereto. The battery cell 20 may be in the shape of a cylinder, a flat body, a cuboid or others.

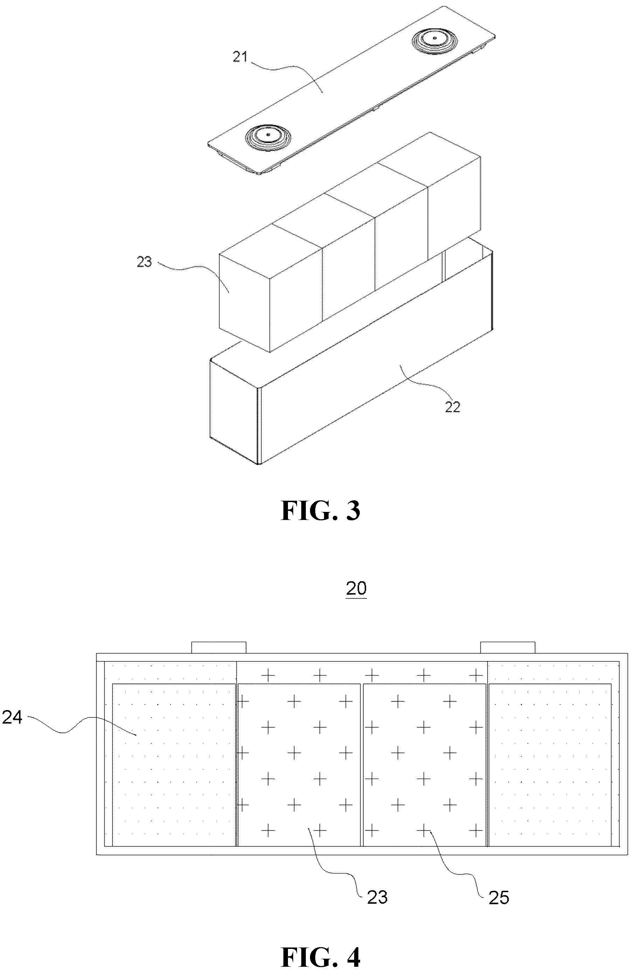

Please refer to Fig. 3, Fig. 3 is an exploded schematic structural diagram of a first battery cell according to some examples of the present application. The battery cell 20 refers to the smallest unit that constitutes the battery. As shown in Fig. 3, the battery cell 20 includes an end cover 21, a case 22, electrode assemblies 23, and other functional components.

The end cover 21 is a component that covers an opening of the case 22 to isolate the internal environment of the battery cell 20 from the external environment. Without limitation, the shape of the end cover 21 may be adapted to the shape of the case 22 to fit the case 22. Optionally, the end cover 21 may be made of a material with a certain hardness and strength (such as aluminum alloy). In this way, the end cover 21 is less likely to deform when being extruded and collided, so that the battery cell 20 can have higher structural strength and safety performance can also be improved. The end cover 21 may be provided with functional components such as electrode terminals. The electrode terminal may be used for electrical connection with the electrode assembly 23 for outputting or inputting electrical energy of the battery cell 20. In some examples, the end cover 21 may be further provided with a pressure relief mechanism for relieving internal pressure when the internal pressure or temperature of the battery cell 20 reaches a threshold. The end cover 21 may also be made of various materials, such as copper, iron, aluminum, stainless steel, aluminum alloy, and plastic, which is not particularly limited in the examples of the present application. In some examples, an insulating member may further be arranged on the inner side of the end cover 21, and the insulating member may be configured to isolate electrical connection components in the case 22 from the end cover 21 to reduce the risk of short circuit. Exemplarily, the insulating member may be plastic, rubber, etc.

The case 22 is an assembly configured to cooperate with the end cover 21 to form the internal environment of the battery cell 20, wherein the formed internal environment can be used to accommodate the electrode assemblies 23, electrolyte solution, and other components. The case 22 and the end cover 21 may be independent components. An opening may be provided in the case 22, and the end cover 21 covers the opening to form the internal environment of the battery cell 20. Without limitation, the end cover 21 and the case 22 may also be integrated. Specifically, the end cover 21 and the case 22 may form a common connection surface before the other components are put into the case. When it is necessary to encapsulate the interior of the case 22, the end cover 21 covers the case 22. The case 22 may be of various shapes and various sizes, such as a rectangle, a cylinder, a hexagonal prism, etc. Specifically, the shape of the case 22 may be determined according to the specific shape and size of the electrode assembly 23. The case 22 may be made of various materials, such as copper, iron, aluminum, stainless steel, aluminum alloy, and plastic, which is not particularly limited in the examples of the present application.

The electrode assembly 23 is a component in which an electrochemical reaction occurs in the battery cell 20. One or more electrode assemblies 23 may be included in the case 22. The electrode assembly 23 is mainly formed by winding or stacking a positive electrode plate and a negative electrode plate, and a separating diaphragm is usually arranged between the positive electrode plate and the negative electrode plate. The parts of the positive electrode plate and the negative electrode plate having an active material constitute a main body part of the electrode assembly, and the parts of the positive electrode plate and the negative electrode plate not having the active material constitute tabs separately. The positive tab and the negative tab may be located at one end of the main body part together or respectively located at both ends of the main body part. During charging and discharging processes of the battery, the positive electrode active material and the negative electrode active material react with the electrolyte solution, and the tabs are connected to the electrode terminals to form a current loop.

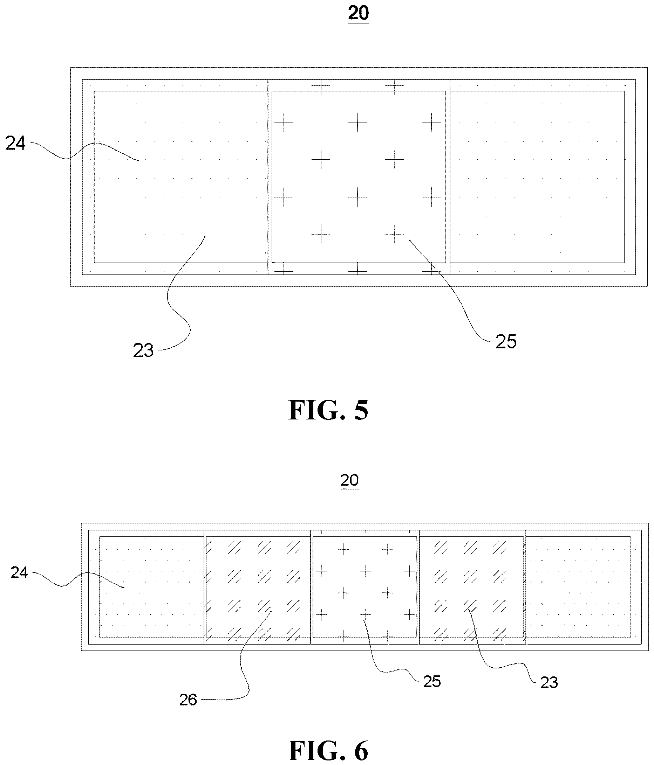

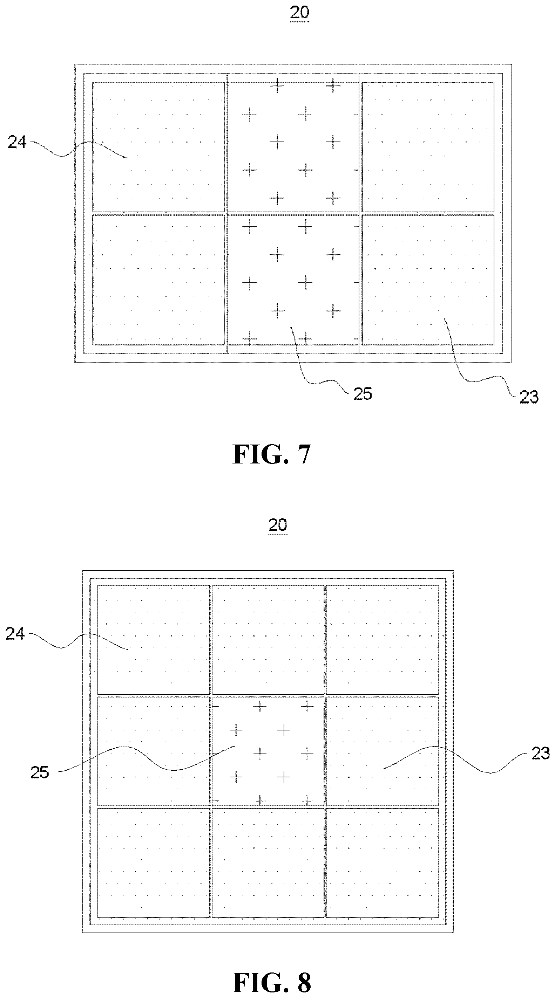

According to some examples of the present application, please refer to Fig. 3 to Fig. 8, Fig. 4 is a perspective view of a first battery cell from a front view according to some examples of the present application, Fig. 5 is a schematic diagram of the arrangement of electrode assemblies in a first battery cell according to some examples of the present application, Fig. 6 is a schematic diagram of the arrangement of electrode assemblies in a second battery cell according to some examples of the present application, Fig. 7 is a schematic diagram of the arrangement of electrode assemblies in a third battery cell according to some examples of the present application, and Fig. 8 is a schematic diagram of the arrangement of electrode assemblies in a fourth battery cell according to some examples of the present application.

The present application provides a battery cell 20, including: a case 22 and at least three electrode assemblies 23; wherein a cavity is defined in the case 22, the cavity includes a first region 24 and a second region 25, the first region 24 is closer to the case 22 than the second region 25, the at least three electrode assemblies 23 are arranged in the cavity, the electrode assemblies 23 have polarization parameters P, $P=(R_x \times R_y)^{0.5}$, wherein $R_x$ is the resistance of a positive electrode plate, $R_y$ is the resistance of a negative electrode plate, the polarization parameter of a single electrode assembly 23 located in the first region 24 is $P_A$, the polarization parameter of a single electrode assembly located in the second region 25 is $P_B$, and $P_A < P_B$.

The first region 24 is a region closer to the case 22 than the second region 25, and there may be one or more electrode assemblies 23 in the first region 24.

The second region 25 is a region further away from the case 22 than the first region 24, and there may be one or more electrode assemblies 23 in the second region 25.

It should be noted that the first region 24 and the second region 25 are relative to each other, the cavity may be divided into a first cavity and a second cavity, and the cavity may further include other regions besides the first and the second cavity.

For example, please refer to Fig. 3 to Fig. 5. The battery cell 20 includes four electrode assemblies 23, and the four electrode assemblies 23 are stacked in a row along the stacking direction. The region including the two electrode assemblies 23 at both ends is the first region 24, and the region including the two electrode assemblies 23 in the middle is the second region 25. That is, in this structure, the cavity is divided into the first cavity and the second cavity.

Please refer to Fig. 6, the battery cell 20 includes five electrode assemblies 23, and the five electrode assemblies 23 are stacked in a row along a stacking direction. The region including the two electrode assemblies 23 at both ends is the first region 24, and the region including the electrode assembly 23 in the middle is the second region 25. That is, in this structure, the cavity further includes other regions besides the first cavity and the second cavity.

In addition, the second region 25 being further away from the case 22 than the first region 24 does not necessarily mean that the second region 25 does not directly touch the case 22.

For example, please refer to Fig. 3 to Fig. 5, each electrode assembly 23 located in the second region 25 has two side surfaces abutting or close to the case 22, and each electrode assembly 23 located in the first region 24 has three side surfaces abutting or close to the case 22, so it can be understood that the area of the surface of the single electrode assembly 23 located in the first region 24 abutting or close to the case 22 is larger than that of the surface of the single electrode assembly 23 located in the second region 25 abutting or close to the case 22, and it can also be considered that the second region 25 is further away from the case 22 than the first region 24.

Please refer to Fig. 7, the battery cell 20 includes six electrode assemblies 23, and the six electrode assemblies 23 are stacked in two rows along the stacking direction. The region including the four electrode assemblies 23 at both ends is the first region 24, and the region including the two electrode assemblies 23 in the middle is the second region 25. Each electrode assembly 23 located in the second region 25 has one side surface abutting or close to the case 22, and each electrode assembly 23 located in the first region 24 has three side surfaces abutting or close to the case 22, so it can be understood that the area of the surface of the single electrode assembly 23 located in the first region 24 abutting or close to the case 22 is larger than that of the surface of the single electrode assembly 23 located in the second region 25 abutting or close to the case 22, and it can also be considered that the second region 25 is further away from the case 22 than the first region 24.

Please refer to Fig. 8, the battery cell 20 includes nine electrode assemblies 23, and the nine electrode assemblies 23 are stacked in three rows along the stacking direction. The region including one electrode assembly 23 in the middle is the second region 25, and the region including the remaining eight electrode assemblies 23 around the middle electrode assembly 23 is the first region 24. Each electrode assembly 23 located in the second region 25 is far away from the case 22, and each electrode assembly 23 located in the first region 24 has a side surface abutting or close to the case 22, so it can be understood that the second region 25 is further away from the case 22 than the first region 24.

At least one of a positive electrode plate or a negative electrode plate in the electrode assembly 23 is one piece, that is, the electrode assembly 23 may include one positive electrode plate and one negative electrode plate, or may include one positive electrode plate and a plurality of negative electrode plates, or may include one negative electrode plate and a plurality of positive electrode plates.

Optionally, the cavity is divided into a plurality of temperature rise regions, and different temperature rise regions have different temperature rises. The first region 24 is the region with the lowest temperature rise, and the second region 25 is the region with the highest temperature rise.

An electrode plate resistance test is performed using a test method well known in the art. As an example, the following method can be used for testing: a test instrument is Initial Energy Science & Technology Co., Ltd (IEST), BER1000 electrode plate resistance tester, and the specific steps are as follows: soaking the fully disassembled positive electrode plate or negative electrode plate in dimethyl carbonate for 30 minutes and then oven-drying respectively, cutting the electrode plate into 10 cm* 10 cm square samples to be tested, placing the samples in parallel between two conductive terminals of an internal resistance tester, and applying a fixed pressure to test the resistance R of the electrode plate to be tested, wherein the diameter of the conductive terminal is 14 mm, the applied pressure is 15 Mpa-27 MPa, and the sampling time is 10 s-20 s. Read out a resistance value R of the corresponding electrode plate according to calculation and display of the device.

Since the operating temperature of the electrode assembly 23 in the second region 25 is higher than that of the electrode assembly 23 in the first region 24, under the same cut-off condition, an actual state of charge (SOC) usage range of the electrode assembly 23 in the second region 25 is wider. The battery cell 20 of the present application balances the broadening of the SOC usage range due to a temperature rise by controlling the polarization parameter $P_B$ of the single electrode assembly 23 in the second region 25 to be greater than the polarization parameter $P_A$ of the single electrode assembly 23 in the first region 24, so that the degree of delithiation of the single electrode assembly 23 in the second region 25 matches the degree of delithiation of the single electrode assembly 23 in the first region 24, thereby improving or avoiding fast capacity attenuation of the battery cell 20 caused by inconsistent attenuation of the different electrode assemblies 23, and extending the service life of the battery cell 20.

According to some examples of the present application, optionally, the volume of the battery cell 20 is Vmm$^3$, and V, $P_B$ and $P_A$ satisfy the following relationship: $6.1 \geq P_B \times \ln(V)/P_A \leq 12$.

When $6.1 \leq P_B \times \ln(V)/P_A \leq 12$, the difference between the polarization parameter $P_A$ of the single electrode assembly 23 located in the first region 24 of the battery cell 20 and the polarization parameter $P_B$ of the single electrode assembly 23 located in the second region 25 is not too large or too small; when $P_B \times \ln(V)/P_A$ is less than 6.1, the difference between the polarization parameter $P_A$ of the single electrode assembly 23 located in the first region 24 of the battery cell 20 and the polarization parameter $P_B$ of the single electrode assembly 23 located in the second region 25 is too small, or it may lead to $P_A > P_B$, which has less effect on improving the service life of the battery cell 20; when $P_B \times \ln(V)/P_A$ is greater than 12, the difference between the polarization parameter $P_A$ of the single electrode assembly 23 located in the first region 24 of the battery cell 20 and the polarization parameter $P_B$ of the single electrode assembly 23 located in the second region 25 is too large, which may reduce the service life of the battery cell 20.

According to some examples of the present application, optionally, please continue to refer to Fig. 3 to Fig. 6, the at least three electrode assemblies 23 are stacked in the cavity, and along the stacking direction, the polarization parameters of the electrode assemblies 23 located at both ends are $P_A$, and the polarization parameters of the electrode assemblies 23 located in the middle are $P_B$.

When the at least three electrode assemblies 23 are stacked in the cavity, the electrode assembly 23 located at both ends is closer to the case 22 than the electrode assembly 23 located in the middle, the temperature rise of the electrode assembly located 23 in the middle is higher than that of the electrode assembly 23 located at both ends during use, that is, the actual SOC usage range of the electrode assembly 23 in the middle is wider under the same cut-off condition, which will lead to faster capacity attenuation. The battery cell 20 of the present application balances the broadening of the SOC usage range due to a temperature rise by controlling the polarization parameter $_B$ of the electrode assembly 23 located in the middle to be greater than the polarization parameter $P_A$ of the electrode assembly 23 located at both ends, so that the degree of delithiation of the electrode assembly 23 in the middle matches the degree of delithiation of the electrode assembly 23 located at both ends, thereby improving or avoiding fast capacity attenuation of the battery cell 20 caused by inconsistent attenuation of the different electrode assemblies 23, and extending the service life of the battery cell 20.

According to some examples of the present application, optionally, please refer to Fig. 6, the cavity further includes a third region 26, the third region 26 is closer to the case 22 than the second region 25, the first region 24 is closer to the case 22 than the third region 26, the polarization parameter of a single electrode assembly 23 located in the third region 26 is Pc, and $P_B \geq P_C \geq P_A$.

The third region 26 is a region further away from the case 22 than the first region 24 and closer to the case 22 than the second region 25, and there may be one or more electrode assemblies 23 in the third region 26.

It should be noted that when in $P_B \geq P_C$, $P_B = P_C$ is satisfied, $P_C > P_A$; when in $P_C \geq P_A$, $P_C = P_A$ is satisfied, $P_B > P_C$, that is, two equal signs in $P_B \geq P_C \geq P_A$ cannot be satisfied at the same time.

Optionally, $P_B \geq P_C \geq P_A$.

Since the operating temperature of the electrode assembly 23 in the second region 25 is higher than that of the electrode assembly 23 in the third region 26, and the operating temperature of the electrode assembly 23 in the third region 26 is higher than that of the electrode assembly 23 in the first region 24, under the same cut-off condition, the actual SOC usage range of the electrode assembly 23 in the second region 25 is wider than the actual SOC usage range of the electrode assembly 23 in the third region 26, the actual SOC usage range of the electrode assembly 23 in the third region 26 is wider than the actual SOC usage range of the electrode assembly 23 in the first region 24, $P_B \geq P_C \geq P_A$ is beneficial to balancing the broadening of the usage range of the electrode assembly 23 due to the temperature rises of different regions, and a gradient progressive relationship is realized, so that the degree of delithiation of the single electrode assembly 23 in the different regions matches better, thereby extending the service life of the battery cell 20.

According to some examples of the present application, optionally, the battery cell 20 satisfies at least one of the following conditions a-e: a, the proportion of a conductive agent in the active material of the single electrode assembly 23 located in the first region 24 is greater than that of a conductive agent in an active material of the single electrode assembly 23 located in the second region 25, the active material including a positive electrode active material and/or a negative electrode active material; b, a coating mass of the positive electrode active material of the single electrode assembly 23 located in the first region 24 is less than that of the positive electrode active material of the single electrode assembly 23 located in the second region 25; c, a compacted density of the electrode plate of the single electrode assembly 23 located in the first region 24 is greater than that of the electrode plate of the single electrode assembly 23 located in the second region 25, the electrode plate including a positive electrode plate and/or a negative electrode plate; d, a powder resistance of the positive electrode active material of the single electrode assembly 23 located in the first region 24 is less than that of the positive electrode active material of the single electrode assembly 23 located in the second region 25; and e, a powder resistance of the negative electrode active material of the single electrode assembly 23 located in the first region 24 is less than that of the negative electrode active material of the single electrode assembly 23 located in the second region 25.

The proportion of the conductive agent in the active material of the single electrode assembly 23, the coating mass of the positive electrode active material of the single electrode assembly 23, the compacted density of the electrode plate of the single electrode assembly 23, the powder resistance of the positive electrode active material of the single electrode assembly 23, and the powder resistance of the negative electrode active material of the single electrode assembly 23 will affect the polarization parameter P of the electrode assembly 23.

Optionally, the battery cell 20 satisfies at least one of the following conditions a-e: a, the proportion of a conductive agent in the active material of the single electrode assembly 23 located in the first region 24 is greater than that of a conductive agent in an active material of the single electrode assembly 23 located in the second region 25, the active material including a positive electrode active material and/or a negative electrode active material; b, a coating mass of the positive electrode active material of the single electrode assembly 23 located in the first region 24 is less than that of the positive electrode active material of the single electrode assembly 23 located in the second region 25; and c, a compacted density of the electrode plate of the single electrode assembly 23 located in the first region 24 is greater than that of the electrode plate of the single electrode assembly 23 located in the second region 25, the electrode plate including a positive electrode plate and/or a negative electrode plate;

According to some examples of the present application, optionally, the ratio of the proportion of the conductive agent in the active material of the single electrode assembly 23 located in the first region 24 to the proportion of the conductive agent in the active material of the single electrode assembly 23 located in the second region 25 is 1.01-3: 1.

As an example, the ratio of the proportion of the conductive agent in the active material of the single electrode assembly 23 located in the first region 24 to the proportion of the conductive agent in the active material of the single electrode assembly 23 located in the second region 25 may be 1.01:1, 1.05:1, 1.1:1, 1.2:1, 1.3:1, 1.4:1, 1.5:1, 1.6:1, 1.7:1, 1.8:1, 1.9:1, 2:1, 2.2:1, 2.5:1, 2.8:1 or 3:1.

And it may be that the ratio of the proportion of the conductive agent in the positive electrode active material of the single electrode assembly 23 located in the first region 24 to the proportion of the conductive agent in the positive electrode active material of the single electrode assembly 23 located in the second region 25 is 1.01-3:1; or the ratio of the proportion of the conductive agent in the negative electrode active material of the single electrode assembly 23 located in the first region 24 to the proportion of the conductive agent in the negative electrode active material of the single electrode assembly 23 located in the second region 25 is 1.01-3:1; or the ratio of the proportion of the conductive agent in the positive electrode active material of the single electrode assembly 23 located in the first region 24 to the proportion of the conductive agent in the positive electrode active material of the single electrode assembly 23 located in the second region 25 is 1.01-3:1, and the ratio of the proportion of the conductive agent in the negative electrode active material of the single electrode assembly 23 located in the first region 24 to the proportion of the conductive agent in the negative electrode active material of the single electrode assembly 23 located in the second region 25 is 1.01-3:1.

Optionally, the ratio of the proportion of the conductive agent in the active material of the single electrode assembly 23 located in the first region 24 to the proportion of the conductive agent in the active material of the single electrode assembly 23 located in the second region 25 is 1.01-2: 1.

The greater the proportion of the conductive agent in the active material of the single electrode assembly 23, the lower the polarization parameter P of the electrode assembly 23. When the ratio of the proportion of the conductive agent in the active material of the single electrode assembly 23 located in the first region 24 to the proportion of the conductive agent in the active material of the single electrode assembly 23 located in the second region 25 is 1.01-3: 1, not only can the polarization parameter $P_A$ of the single electrode assembly 23 located in the first region 24 be less than the polarization parameter $P_B$ of the single electrode assembly 23 located in the second region 25, but also the battery cell 20 can maintain a high energy density.

According to some examples of the present application, optionally, the ratio of the coating mass of the positive electrode active material of the single electrode assembly 23 located in the first region 24 to the coating mass of the positive electrode active material of the single electrode assembly 23 located in the second region 25 is 0.7-0.99: 1.

As an example, the ratio of the coating mass of the positive electrode active material of the single electrode assembly 23 located in the first region 24 to the coating mass of the positive electrode active material of the single electrode assembly 23 located in the second region 25 may be 0.7:1, 0.75:1, 0.8:1, 0.85:1, 0.9:1, 0.95:1 or 0.99:1.

Optionally, the ratio of the coating mass of the positive electrode active material of the single electrode assembly 23 located in the first region 24 to the coating mass of the positive electrode active material of the single electrode assembly 23 located in the first region 24 is 0.85-0.99: 1.

The greater the coating mass of the positive electrode active material of the single electrode assembly 23, the higher the polarization parameter P of the electrode assembly 23. When the ratio of the coating mass of the positive electrode active material of the single electrode assembly 23 located in the first region 24 to the coating mass of the positive electrode active material of the single electrode assembly 23 located in the second region 25 is 0.7-0.99: 1, not only can the polarization parameter $P_A$ of the single electrode assembly 23 located in the first region 24 be less than the polarization parameter $P_B$ of the single electrode assembly 23 located in the second region 25, but also the difference between the polarization parameter $P_A$ of the single electrode assembly 23 located in the first region 24 of the battery cell 20 and the polarization parameter $P_B$ of the single electrode assembly 23 located in the second region 25 of the battery cell can be prevented from being too large.

Optionally, the coating mass of the positive electrode active material layer of the electrode assembly 23 is 0.1 g/1540.25 mm$^2$ to 0.6 g/1540.25 mm$^2$.

Optionally, the coating mass of the positive electrode active material layer of the electrode assembly 23 is 0.2 g/1540.25 mm$^2$ to 0.45 g/1540.25 mm$^2$.

Optionally, the positive electrode active material includes any one of nickel-cobalt-manganese (NCM), nickel-cobalt-aluminum (NCA), lithium iron phosphate, lithium manganate, lithium cobalt oxide, lithium nickelate, sodium ion compounds, and lithium manganese iron phosphate.

Optionally, the coating mass of the negative electrode active material layer of the electrode assembly 23 is 0.05 g/1540.25 mm$^2$ to 0.4 g/1540.25 mm$^2$.

Optionally, the coating mass of the negative electrode active material layer of the electrode assembly 23 is 0.12 g/1540.25 mm$^2$ to 0.2 g/1540.25 mm$^2$.

Optionally, the negative electrode active material includes any one or more of artificial graphite, natural graphite, soft carbon, hard carbon, graphene, carbon nanotubes, and lithium titanate.

According to some examples of the present application, optionally, the ratio of the compacted density of the electrode plate of the single electrode assembly 23 located in the first region 24 to the compacted density of the electrode plate of the single electrode assembly 23 located in the second region 25 is 1.01-1.5: 1.

As an example, the ratio of the compacted density of the electrode plate of the single electrode assembly 23 located in the first region 24 to the compacted density of the electrode plate of the single electrode assembly 23 located in the second region 25 may be 1.01:1, 1.05:1, 1.1:1, 1.2:1, 1.3:1, 1.4:1 or 1.5:1.

Optionally, the ratio of the compacted density of the electrode plate of the single electrode assembly 23 located in the first region 24 to the compacted density of the electrode plate of the single electrode assembly 23 located in the second region 25 is 1.01-1.3: 1.

The greater the compacted density of the electrode plate of the single electrode assembly 23, the lower the polarization parameter P of the electrode assembly 23. When the ratio of the compacted density of the electrode plate of the single electrode assembly 23 located in the first region 24 to the compacted density of the electrode plate of the single electrode assembly 23 located in the second region 25 is 1.01-1.5: 1, not only can the polarization parameter $P_A$ of the single electrode assembly 23 located in the first region 24 be less than the polarization parameter $P_B$ of the single electrode assembly 23 located in the second region 25, but also the battery cell 20 can maintain a higher energy density.

Optionally, the compacted density of the positive electrode plate is 1.8 g/ cc to 3.9 g/ cc.

Optionally, the compacted density of the positive electrode plate is 2.1 g/ cc to 3.6 g/ cc.

Optionally, the compacted density of the negative electrode plate is 0.5 g/ cc to 2.2 g/ cc.

Optionally, the compacted density of the negative electrode plate is 1 g/ cc to 1.8 g/ cc.

The battery cell 20 of the present application is further described in detail below with reference to the examples.

The battery cell 20 of Examples 1 to 14 and Comparative Example 1 is shown in Fig. 3 to Fig. 5. The battery cell 20 includes four electrode assemblies 23. The four electrode assemblies 23 are stacked in a row along a stacking direction. A region including the two electrode assemblies 23 at both ends is a first region 24, and a region including the two electrode assemblies 23 in the middle is a second region 25.

The battery cell 20 of Examples 15 to 17 and Comparative Example 2 is shown in Fig. 6. The battery cell 20 includes five electrode assemblies 23. The five electrode assemblies 23 are stacked in a row along a stacking direction. A region including the two electrode assemblies 23 at both ends is a first region 24, a region including one electrode assembly 23 in the middle is a second region 25, and along the stacking direction, a region including the second and fourth electrode assemblies 23 is a third region 26.

The material selection and parameters of the electrode assemblies 23 of Examples 1 to 17 and Comparative Examples 1 to 2 located in the first region 24 are shown in Table 1. The material selection and parameters of the electrode assemblies 23 of Examples 1 to 17 and Comparative Examples 1 to 2 located in the second region 25 are shown in Table 2. The material selection and parameters of the electrode assemblies 23 of Examples 15 to 17 and Comparative Example 2 located in the third region 26 are shown in Table 3.

Table 1 Electrode Assemblies 23 of Examples 1 to 17 and Comparative Examples 1 to 2 Located in First Region 24

| Project | Electrode assemblies 23 located in first region 24 | | | | | | | | |
|---|---|---|---|---|---|---|---|---|---|
| | Coating mass of positive electrode active material | Compacted density of positive electrode plate | Proportion of positive electrode conductive agent | Coating mass of negative electrode active material | Compacted density of the negative electrode plate | Proportion of negative conductive agent | Positive electrode active material | Negative electrode active material | Polarization parameters |
| Example 1 | 0.3 g/1540.25 mm$^2$ | 2.6 g/cc | 1.5 wt% | 0.15 g/1540.25 mm$^2$ | 1.4 g/cc | 1.5 wt% | NCM | artificial graphite | 0.0245 |
| Example 2 | 0.3 g/1540.25 mm$^2$ | 2.6 g/cc | 1.01wt% | 0.15 g/1540.25 mm$^2$ | 1.4 g/cc | 1.01 wt% | NCM | artificial graphite | 0.0294 |
| Example 3 | 0.3 g/1540.25 mm$^2$ | 2.6 g/cc | 2 wt% | 0.15 g/1540.25 mm$^2$ | 1.4 g/cc | 2 wt% | NCM | artificial graphite | 0.0190 |
| Example 4 | 0.3 g/1540.25 mm$^2$ | 2.6 g/cc | 3 wt% | 0.15 g/1540.25 mm$^2$ | 1.4 g/cc | 3 wt% | NCM | artificial graphite | 0.0158 |
| Example 5 | 0.3 g/1540.25 mm$^2$ | 2.6 g/cc | 1.5 wt% | 0.15 g/1540.25 mm$^2$ | 1.4 g/cc | 1 wt% | NCM | artificial graphite | 0.0276 |
| Example 6 | 0.3 g/1540.25 mm$^2$ | 2.6 g/cc | 1 wt% | 0.15 g/1540.25 mm2 | 1.4 g/cc | 1.5 wt% | NCM | artificial graphite | 0.0274 |
| Example 7 | 0.3 g/1540.25 mm$^2$ | 2.6 g/cc | 1 wt% | 0.15 g/1540.25 mm$^2$ | 1.4 g/cc | 1 wt% | NCM | artificial graphite | 0.0308 |
| Example 8 | 0.3 g/1540.25 mm$^2$ | 2.6 g/cc | 1 wt% | 0.15 g/1540.25 mm$^2$ | 1.4 g/cc | 1 wt% | NCM | artificial graphite | 0.0308 |
| Example 9 | 0.3 g/1540.25 mm$^2$ | 2.6 g/cc | 1 wt% | 0.15 g/1540.25 mm$^2$ | 1.4 g/cc | 1 wt% | NCM | artificial graphite | 0.0308 |
| Example 10 | 0.3 g/1540.25 mm$^2$ | 3.38 g/cc | 1 wt% | 0.15 g/1540.25 mm$^2$ | 1.82 g/cc | 1 wt% | NCM | artificial graphite | 0.0245 |
| Example 11 | 0.3 g/1540.25 mm$^2$ | 2.63 g/cc | 1 wt% | 0.15 g/1540.25 mm$^2$ | 1.41 g/cc | 1 wt% | NCM | artificial graphite | 0.0297 |
| Example 12 | 0.3 g/1540.25 mm$^2$ | 3.9 g/cc | 1 wt% | 0.15 g/1540.25 mm$^2$ | 2.1 cc | 1 wt% | NCM | artificial graphite | 0.0190 |
| Example 13 | 0.3 g/1540.25 mm$^2$ | 3.38 g/cc | 1 wt% | 0.15 g/1540.25 mm$^2$ | 1.4 g/cc | 1 wt% | NCM | artificial graphite | 0.0276 |

(continued)

| Project | Electrode assemblies 23 located in first region 24 | | | | | | | | |
|---|---|---|---|---|---|---|---|---|---|
| | Coating mass of positive electrode active material | Compacted density of positive electrode plate | Proportion of positive electrode conductive agent | Coating mass of negative electrode active material | Compacted density of the negative electrode plate | Proportion of negative conductive agent | Positive electrode active material | Negative electrode active material | Polarization parameters |
| Example 14 | 0.3 g/1540.25 mm$^2$ | 2.6 g/cc | 1 wt% | 0.15 g/1540.25 mm$^2$ | 1.82 g/cc | 1 wt% | NCM | artificial graphite | 0.0224 |
| Example 15 | 0.3 g/1540.25 mm$^2$ | 2.6 g/cc | 1 wt% | 0.15 g/1540.25 mm$^2$ | 1.4 g/cc | 1 wt% | NCM | artificial graphite | 0.0308 |
| Example 16 | 0.3 g/1540.25 mm$^2$ | 2.6 g/cc | 1 wt% | 0.15 g/1540.25 mm$^2$ | 1.4 g/cc | 1 wt% | NCM | artificial graphite | 0.0308 |
| Example 17 | 0.3 g/1540.25 mm$^2$ | 2.6 g/cc | 1 wt% | 0.15 g/1540.25 mm$^2$ | 1.4 g/cc | 1 wt% | NCM | artificial graphite | 0.0308 |
| Comparative Example 1 | 0.3 g/1540.25 mm$^2$ | 2.6 g/cc | 1 wt% | 0.15 g/1540.25 mm$^2$ | 1.4 g/cc | 1 wt% | NCM | artificial graphite | 0.0308 |
| Comparative Example 2 | 0.3 g/1540.25 mm$^2$ | 2.6 g/cc | 1 wt% | 0.15 g/1540.25 mm$^2$ | 1.4 g/cc | 1 wt% | NCM | artificial graphite | 0.0308 |

Table 2 Electrode Assemblies 23 of Examples 1 to 17 and Comparative Examples 1 to 2 Located in Second Region 25

| Project | Electrode assemblies 23 located in second region 25 | | | | | | | | |
|---|---|---|---|---|---|---|---|---|---|
| | Coating mass of positive electrode active material | Compacted density of positive electrode plate | Proportion of positive electrode conductive agent | Coating mass of negative electrode active material | Compacted density of the negative electrode plate | Proportion of negative conductive agent | Positive electrode active material | Negative electrode active material | Polarization parameters |
| Example 1 | 0.3 g/1540.25 mm$^2$ | 2.6 g/cc | 1 wt% | 0.15 g/1540.25 mm$^2$ | 1.4 g/cc | 1 wt% | NCM | artificial graphite | 0.030822 |
| Example 2 | 0.3 g/1540.25 mm$^2$ | 2.6 g/cc | 1 wt% | 0.15 g/1540.25 mm$^2$ | 1.4 g/cc | 1 wt% | NCM | artificial graphite | 0.030822 |
| Example 3 | 0.3 g/1540.25 mm$^2$ | 2.6 g/cc | 1 wt% | 0.15 g/1540.25 mm$^2$ | 1.4 g/cc | 1 wt% | NCM | artificial graphite | 0.030822 |
| Example 4 | 0.3 g/1540.25 mm$^2$ | 2.6 g/cc | 1 wt% | 0.15 g/1540.25 mm$^2$ | 1.4 g/cc | 1 wt% | NCM | artificial graphite | 0.030822 |
| Example 5 | 0.3 g/1540.25 mm$^2$ | 2.6 g/cc | 1 wt% | 0.15 g/1540.25 mm$^2$ | 1.4 g/cc | 1 wt% | NCM | artificial graphite | 0.030822 |
| Example 6 | 0.3 g/1540.25 mm$^2$ | 2.6 g/cc | 1 wt% | 0.15 g/1540.25 mm$^2$ | 1.4 g/cc | 1 wt% | NCM | artificial graphite | 0.030822 |
| Example 7 | 0.353 g/1540.25 mm$^2$ | 2.6 g/cc | 1 wt% | 0.15 g/1540.25 mm$^2$ | 1.4 g/cc | 1 wt% | NCM | artificial graphite | 0.032326 |
| Example 8 | 0.429 g/1540.25 mm$^2$ | 2.6 g/cc | 1 wt% | 0.15 g/1540.25 mm$^2$ | 1.4 g/cc | 1 wt% | NCM | artificial graphite | 0.033764 |
| Example 9 | 0.303 g/1540.25 mm$^2$ | 2.6 g/cc | 1 wt% | 0.15 g/1540.25 mm$^2$ | 1.4 g/cc | 1 wt% | NCM | artificial graphite | 0.031733 |
| Example 10 | 0.3 g/1540.25 mm$^2$ | 2.6 g/cc | 1 wt% | 0.15 g/1540.25 mm$^2$ | 1.4 g/cc | 1 wt% | NCM | artificial graphite | 0.0308 |
| Example 11 | 0.3 g/1540.25 mm$^2$ | 2.6 g/cc | 1 wt% | 0.15 g/1540.25 mm$^2$ | 1.4 g/cc | 1 wt% | NCM | artificial graphite | 0.0308 |
| Example 12 | 0.3 g/1540.25 mm$^2$ | 2.6 g/cc | 1 wt% | 0.15 g/1540.25 mm$^2$ | 1.4 g/cc | 1 wt% | NCM | artificial graphite | 0.0308 |
| Example 13 | 0.3 g/1540.25 mm$^2$ | 2.6 g/cc | 1 wt% | 0.15 g/1540.25 mm$^2$ | 1.4 g/cc | 1 wt% | NCM | artificial graphite | 0.0308 |

(continued)

| Project | Electrode assemblies 23 located in second region 25 | | | | | | | | |
|---|---|---|---|---|---|---|---|---|---|
| | Coating mass of positive electrode active material | Compacted density of positive electrode plate | Proportion of positive electrode conductive agent | Coating mass of negative electrode active material | Compacted density of the negative electrode plate | Proportion of negative conductive agent | Positive electrode active material | Negative electrode active material | Polarization parameters |
| Example 14 | 0.3 g/1540.25 mm$^2$ | 2.6 g/cc | 1 wt% | 0.15 g/1540.25 mm$^2$ | 1.4 g/cc | 1 wt% | NCM | artificial graphite | 0.0308 |
| Example 15 | 0.353 g/1540.25 mm$^2$ | 2.6 g/cc | 1 wt% | 0.15 g/1540.25 mm$^2$ | 1.4 g/cc | 1 wt% | NCM | artificial graphite | 0.032326 |
| Example 16 | 0.353 g/1540.25 mm$^2$ | 2.6 g/cc | 1 wt% | 0.15 g/1540.25 mm$^2$ | 1.4 g/cc | 1 wt% | NCM | artificial graphite | 0.032326 |
| Example 17 | 0.353 g/1540.25 mm$^2$ | 2.6 g/cc | 1 wt% | 0.15 g/1540.25 mm$^2$ | 1.4 g/cc | 1 wt% | NCM | artificial graphite | 0.032326 |
| Comparative Example 1 | 0.3 g/1540.25 mm$^2$ | 2.6 g/cc | 1 wt% | 0.15 g/1540.25 mm$^2$ | 1.4 g/cc | 1 wt% | NCM | artificial graphite | 0.0308 |
| Comparative Example 2 | 0.3 g/1540.25 mm$^2$ | 2.6 g/cc | 1 wt% | 0.15 g/1540.25 mm$^2$ | 1.4 g/cc | 1 wt% | NCM | artificial graphite | 0.0308 |

Table 3 Electrode Assemblies 23 of Examples 15 to 17 and Comparative Example 2 Located in Third Region 26

| Project | Electrode assemblies 23 located in third region 26 | | | | | | | | |
| --- | --- | --- | --- | --- | --- | --- | --- | --- | --- |
| | Coating mass of positive electrode active material | Compacted density of positive electrode plate | Proportion of positive electrode conductive agent | Coating mass of negative electrode active material | Compacted density of the negative electrode plate | Proportion of negative conductive agent | Positive electrode active material | Negative electrode active material | Polarization parameters |
| Example 15 | 0.3 g/1540.25 mm$^2$ | 2.6 g/cc | 1 wt% | 0.15 g/1540.25 mm$^2$ | 1.4 g/cc | 1 wt% | NCM | artificial graphite | 0.0308 |
| Example 16 | 0.353 g/1540.25 mm$^2$ | 2.6 g/cc | 1 wt% | 0.15 g/1540.25 mm$^2$ | 1.4 g/cc | 1 wt% | NCM | artificial graphite | 0.0323265 |
| Example 17 | 0.32 g/1540.25 mm$^2$ | 2.6 g/cc | 1 wt% | 0.15 g/1540.25 mm$^2$ | 1.4 g/cc | 1 wt% | NCM | artificial graphite | 0.0317 |
| Comparative Example 2 | 0.3 g/1540.25 mm$^2$ | 2.6 g/cc | 1 wt% | 0.15 g/1540.25 mm$^2$ | 1.4 g/cc | 1 wt% | NCM | artificial graphite | 0.0308 |

Preparation method of the battery cell 20:

S1: dissolve a positive electrode material in N-methyl pyrrolidone according to an appropriate weight ratio, stir under vacuum to obtain positive electrode slurry, apply the slurry evenly on surfaces of aluminum foil to ensure that coating weights on both sides of the aluminum foil are the same, and then cold press an electrode plate to obtain a positive electrode plate.

S2: dissolve a negative electrode material in deionized water according to an appropriate weight ratio, stir fully to obtain negative electrode slurry, apply the slurry evenly on surfaces of copper foil to ensure that coating weights on both sides of the aluminum foil are the same, and then cold press an electrode plate to obtain a negative electrode plate.

S3: perform die-cutting, winding, hot pressing, welding and liquid injection on the positive electrode plate and the negative electrode plate prepared under the above different conditions, to obtain a hard case lithium-ion battery 100.

S4: perform formation of the lithium-ion battery 100, charging the lithium-ion battery to 3.0 V with a constant current of 0.1 C, and charging the lithium-ion battery to 3.75 V with a constant current of 0.2 C.

S5: perform a capacity test on the lithium-ion battery 100, wherein a charging method includes charging with a constant current of 0.33 C to a rated upper voltage and further charging with a constant voltage until the current is 0.05 C, and discharging the charged lithium-ion battery 100, and a discharging method includes discharging with a direct current of 0.33 C to a rated lower limit voltage, to obtain a discharge capacity of the lithium-ion battery 100.

Test Example

Take the battery cells 20 of Examples 1 to 17 and Comparative Examples 1 to 2 of the present application, measure the numbers of cycles and energy densities thereof respectively, and calculate a $P_B \times \ln(V)/P_A$ value. The results are as shown in Table 4.

The number of cycles is measured by the following method:
performing a 0.5 C/0.5 C cycle test at 25 DEG C on the battery cell 20, and stopping the test until the capacity is attenuated to 80% of the initial capacity, thus obtaining the number of cycles.

$$\text{Energy density} = \text{energy/volume, unit wh/L.}$$

Energy test method: charge with a constant current of 0.33 c to an upper limit voltage, charge with a constant voltage to 0.05 c, and discharge to a lower limit voltage at 0.33 c, thus obtain discharge energy (wh).

The volume is calculated based on the external length, width and height of the case 22 of the battery cell 20.

Table 4 Number of Cycles, Energy density and $P_B \times \ln(V)/P_A$ Value of Battery Cell 20 of Examples 1 to 17 and Comparative Examples 1 to 2

| Project | Number of cycles @80% SOH | Energy density (wh/L) | $P_B \times \ln(V)/P_A$ |
|---|---|---|---|
| Example 1 | 2350 | 596 | 7.55 |
| Example 2 | 2120 | 600 | 6.29 |
| Example 3 | 2600 | 595 | 9.75 |
| Example 4 | 2500 | 593 | 11.70 |
| Example 5 | 2200 | 595 | 6.71 |
| Example 6 | 2150 | 595 | 6.75 |
| Example 7 | 2100 | 600 | 6.29 |
| Example 8 | 2150 | 600 | 6.57 |
| Example 9 | 2050 | 600 | 6.18 |
| Example 10 | 2300 | 605 | 7.55 |
| Example 11 | 2100 | 600 | 6.23 |
| Example 12 | 2550 | 603 | 9.75 |
| Example 13 | 2200 | 605 | 6.71 |
| Example 14 | 2400 | 605 | 8.27 |

(continued)

| Project | Number of cycles @80% SOH | Energy density (wh/L) | $P_B \times \ln(V)/P_A$ |
|---|---|---|---|
| Example 15 | 2100 | 602 | 6.29 |
| Example 16 | 2150 | 603 | 6.29 |
| Example 17 | 2200 | 602 | 6.29 |
| Comparative Example 1 | 1900 | 600 | 6 |
| Comparative Example 2 | 1800 | 605 | 6 |

It can be seen from Examples 1 to 6 that when the ratio of the proportion of the conductive agent in the active material of the electrode assembly 23 located in the first region 24 to the proportion of the conductive agent in the active material of the single electrode assembly 23 located in the second region 25 is 1.01-3:1, $P_A<P_B$ and $6.29 \leq P_B \times \ln(V)/P_A \leq 11.7$, the number of cycles of the battery cell 20 is 2120-2600, and the energy density is 593 Wh/L-600 Wh/L.

It can be seen from examples 7 to 9 that when the ratio of the coating mass of the positive electrode active material of the single electrode assembly 23 located in the first region 24 to the coating mass of the positive electrode active material of the single electrode assembly 23 located in the second region 25 is 0.7-0.99:1, $P_A<P_B$ and $6.18 \leq P_B \times \ln(V)/P_A \leq 6.57$, the number of cycles of the battery cell 20 is 2050-2150, and the energy density is 600 Wh/L.

It can be seen from examples 10 to 14 that when the ratio of the compacted density of the electrode plate of the single electrode assembly 23 located in the first region 24 to the compacted density of the electrode plate of the single electrode assembly 23 located in the second region 25 is 1.01-1.5:1, $P_A<P_B$, and $6.23 \leq P_B \times \ln(V)/P_A \leq 9.75$, the number of cycles of the battery cell 20 is 2100-2550, and the energy density is 600 Wh/L-605 Wh/L.

It can be seen from examples 15 to 17 that when the ratio of the coating mass of the positive electrode active material of the single electrode assembly 23 located in the first region 24 to the coating mass of the positive electrode active material of the single electrode assembly 23 located in the second region 25 is 0.7-0.99:1, and the coating mass of the positive electrode active substance of the single electrode assembly 23 located in the third region 26 is the same as that of the single electrode assembly 23 located in the second region 25, or the coating mass of the positive electrode active material of the single electrode assembly 23 located in the third region 26 is the same as that of the positive electrode active material of the single electrode assembly 23 located in the first region 24, or the coating mass of the positive electrode active material of the single electrode assembly 23 located in the third region 26 is greater than that of the positive electrode active material of the single electrode assembly 23 located in the first region 24, $P_A \leq P_C \leq P_B$ and $P_B \times \ln(V)/P_A=6.29$, the number of cycles of the battery cell 20 is 2100-2200, and the energy density is 602 Wh/L-603 Wh/L.

It can be seen from the comparison between Comparative Example 1 and Example 1 that when the polarization parameter $P_A$ of the single electrode assembly 23 located in the first region 24 is the same as the polarization parameter $P_B$ of the single electrode assembly 23 located in the second region 25, the number of cycles of the battery cell 20 of Comparative Example 1 is only 1900, and the energy density is 600Wh/L. That is, the battery cell 20 of Comparative Example 1 has a shorter service life than the battery cell 20 of Example 1.

It can be seen from the comparison between Comparative Example 2 and Example 15 that when the polarization parameter $P_A$ of the single electrode assembly 23 located in the first region 24 is the same as the polarization parameter $P_B$ of the single electrode assembly 23 located in the second region 25, the number of cycles of the battery cell 20 of Comparative Example 2 is only 1800, and the energy density is 605Wh/L. That is, the battery cell 20 of Comparative Example 2 has a shorter service life than the battery cell 20 of Example 15.

Finally, it should be noted that the above examples are merely used for illustrating rather than limiting the technical solutions of the present application. Although the present application has been described in detail with reference to the above various examples, those of ordinary skill in the art should understand that the technical solutions specified in the above various examples can still be modified, or some or all of the technical features therein can be equivalently substituted; and such modifications or substitutions do not make the essence of the corresponding technical solutions depart from the scope of the technical solutions of the various examples of the present application, which shall fall within the scope of the claims and the specification of the present application. In particular, the technical features mentioned in the various examples can be combined in any manner as long as there is no structural conflict. The present application is not limited to the specific examples disclosed herein, but rather includes all technical solutions falling within the scope of the claims.

**Claims**

1.  A battery cell, comprising:

    a case, a cavity being defined within the case, the cavity comprising a first region and a second region, the first region being closer to the case than the second region; and
    at least three electrode assemblies, the at least three electrode assemblies being arranged in the cavity;
    wherein the electrode assemblies have polarization parameters P, $P = (R_x \times R_y)^{0.5}$, wherein $R_x$ is the resistance of a positive electrode plate and $R_y$ is the resistance of a negative electrode plate;
    the polarization parameter of a single electrode assembly located in the first region is $P_A$, the polarization parameter of a single electrode assembly located in the second region is $P_B$, and $P_A < P_B$.

2.  The battery cell according to claim 1, wherein the volume of the battery cell is $V mm^3$, and V, $P_B$ and $P_A$ satisfy the following relationship:

$$6.1 \leq P_B \times \ln(V)/P_A \leq 12$$

3.  The battery cell according to claim 1 or 2, wherein the at least three electrode assemblies are stacked in the cavity, and along the stacking direction, the polarization parameters of the electrode assemblies located at both ends are $P_A$, and the polarization parameters of the electrode assemblies located in the middle are $P_B$.

4.  The battery cell according to any one of claims 1-3, wherein the cavity further comprises a third region, the third region is closer to the case than the second region, the first region is closer to the case than the third region, the polarization parameter of a single electrode assembly located in the third region is Pc, and $P_B \geq P_C \geq P_A$.

5.  The battery cell according to any one of claims 1-4, wherein at least one of the following conditions a-e is satisfied:

    a, the proportion of a conductive agent in an active material of the single electrode assembly located in the first region is greater than that of a conductive agent in an active material of the single electrode assembly located in the second region, and the active material comprises a positive electrode active material and/or a negative electrode active material;
    b, a coating mass of the positive electrode active material of the single electrode assembly located in the first region is less than that of the positive electrode active material of the single electrode assembly located in the second region;
    c, a compacted density of the electrode plate of the single electrode assembly located in the first region is greater than that of the electrode plate of the single electrode assembly located in the second region, and the electrode plate comprises a positive electrode plate and/or a negative electrode plate;
    d, a powder resistance of the positive electrode active material of the single electrode assembly located in the first region is less than that of the positive electrode active material of the single electrode assembly located in the second region; and
    e, a powder resistance of the negative electrode active material of the single electrode assembly located in the first region is less than that of the negative electrode active material of the single electrode assembly located in the second region.

6.  The battery cell according to claim 5, wherein the ratio of the proportion of the conductive agent in the active material of the single electrode assembly located in the first region to the proportion of the conductive agent in the active material of the single electrode assembly located in the second region is 1.01-3: 1.

7.  The battery cell according to claim 5, wherein the ratio of the coating mass of the positive electrode active material of the single electrode assembly located in the first region to the coating mass of the positive electrode active material of the single electrode assembly located in the second region is 0.7-0.99: 1.

8.  The battery cell according to claim 5, wherein the ratio of the compacted density of the electrode plate of the single electrode assembly located in the first region to the compacted density of the electrode plate of the single electrode assembly located in the second region is 1.01-1.5: 1.

9.  A battery, comprising the battery cell according to any one of claims 1-8.

**10.** An electrical apparatus, comprising the battery according to claim 9, and the battery being configured to provide electric energy.

1000

**FIG. 1**

100

**FIG. 2**

**FIG. 3**

20

**FIG. 4**

**FIG. 5**

**FIG. 6**

20

**FIG. 7**

20

**FIG. 8**

| INTERNATIONAL SEARCH REPORT | International application No. |
|---|---|
| | **PCT/CN2022/125514** |

**A.    CLASSIFICATION OF SUBJECT MATTER**

H01M50/20(2021.01)i

According to International Patent Classification (IPC) or to both national classification and IPC

**B.    FIELDS SEARCHED**

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

VEN, CNABS, CNTXT, ENTXT, ENTXTC, DWPI, CNKI: 电池, 壳, 第二, 电极组件, 电芯, 电阻, 极化, 内, 外, battery, case, cell, second, monomer, resistance, outer, inner, polarization

**C.    DOCUMENTS CONSIDERED TO BE RELEVANT**

| Category* | Citation of document, with indication, where appropriate, of the relevant passages | Relevant to claim No. |
|---|---|---|
| X | CN 114982011 A (CONTEMPORARY AMPEREX TECHNOLOGY CO., LTD.) 30 August 2022 (2022-08-30)<br>        description, paragraphs 93-140 and 179, and tables 7 and 9 | 1-10 |
| A | CN 114982035 A (CONTEMPORARY AMPEREX TECHNOLOGY CO., LTD.) 30 August 2022 (2022-08-30)<br>        entire document | 1-10 |
| A | CN 114976200 A (TAIXING ENERGY SOLUTIONS CO., LTD.) 30 August 2022 (2022-08-30)<br>        entire document | 1-10 |
| A | WO 2020155993 A1 (CONTEMPORARY AMPEREX TECHNOLOGY CO., LTD.) 06 August 2020 (2020-08-06)<br>        entire document | 1-10 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 May 2023** | **22 May 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/125514**

| Patent document cited in search report | | | Publication date (day/month/year) | Patent family member(s) | | | Publication date (day/month/year) |
|---|---|---|---|---|---|---|---|
| CN | 114982011 | A | 30 August 2022 | WO | 2022133959 | A1 | 30 June 2022 |
| | | | | EP | 4044287 | A1 | 17 August 2022 |
| | | | | IN | 202217029976 | A | 09 September 2022 |
| | | | | EP | 4044287 | A4 | 28 December 2022 |
| | | | | US | 2022416330 | A1 | 29 December 2022 |
| CN | 114982035 | A | 30 August 2022 | WO | 2022133963 | A1 | 30 June 2022 |
| | | | | EP | 4047711 | A1 | 24 August 2022 |
| | | | | EP | 4047711 | A4 | 30 November 2022 |
| | | | | US | 2022399607 | A1 | 15 December 2022 |
| | | | | IN | 202217032865 | A | 14 October 2022 |
| CN | 114976200 | A | 30 August 2022 | JP | 2022127181 | A | 31 August 2022 |
| | | | | US | 2022271347 | A1 | 25 August 2022 |
| | | | | EP | 4047704 | A1 | 24 August 2022 |
| WO | 2020155993 | A1 | 06 August 2020 | CN | 111490253 | A | 04 August 2020 |

Form PCT/ISA/210 (patent family annex) (July 2022)